# EUROPEAN PATENT SPECIFICATION

(11) **EP 2 076 352 B1**
(45) Date of publication and mention of the grant of the patent: **02.10.2013**
(21) Application number: 07872106.5
(22) Date of filing: 15.08.2007
(51) Int. Cl.: B23K 20/12

(54) **REFRACTORY METAL TOOLING FOR FRICTION STIR WELDING COMPRISING A SHOULDER MADE OF TANTALUM, NIOBIUM OR HAFNIUM ALLOY AND A COATED OR TREATED SURFACE**
FEUERFESTES METALLWERKZEUG FÜR REIBRÜHRSCHWEISSUNGSOPERATIONEN MIT EINEM SCHULTER AUS TANTALUM-, NIOBIUM-, OR HAFNIUMLEGIERUNG UND EINER BESCHICHTETEN OR BEHANDELTETEN OBERFLÄCHE
OUTILLAGE DE MÉTAL RÉFRACTAIRE POUR SOUDAGE PAR FRICTION - MALAXAGE AVEC UN EPAULEMENT EN ALLIAGE DE TANTALUM, NIOBIUM OU HAFNIUM ET UNE SURFACE REVETUE OU TRAITEE

(30) Priority: 21.08.2006 GB 0616571
(43) Date of publication of application: 08.07.2009
(73) Proprietor: H.c. Starck Ltd, Wiltshire (GB)
(72) Inventor: ROWE, Charles, E.D., Essex CM11 1EY (GB); TUCK, Jonathan, R., Devizes Wiltshire SN10 4HL (GB); STAINES, David, George, Linton CB21 4NB Cambridge (GB); THOMAS, Wayne, Morris, Haverhill CB9 9NJ Suffolk (GB)
(74) Representative: Maiwald Patentanwalts GmbH
(86) International application number: PCT/IB2007/004537
(87) International publication number: WO 2008/102209

(56) References cited:
- WO-A-01/85385
- WO-A-99/52669
- WO-A1-01/85385
- WO-A1-99/52669
- GB-A- 1 540 274
- GB-A- 1 540 274
- US-A- 2 678 270
- US-A- 2 678 270
- US-A1- 2004 050 906
- US-A1- 2004 050 906
- US-A1- 2004 238 599
- US-A1- 2004 238 599
- US-A1- 2005 129 565
- US-A1- 2005 129 565

## Description

### FIELD OF THE INVENTION

Herein described are tungsten, molybdenum, tantalum, niobium, and hafnium-based tools for use in friction stir welding or forming of materials such as steel, titanium, copper and some aluminum alloys.

US 2005 / 129 565 describes a tungsten alloy tool including rehnium, hafnium and carbon, balance tungsten.

### BACKGROUND INFORMATION

Friction stir welding (FSW) is a method of joining metal parts without the use of fusion or filler materials. In FSW a cylindrical, shouldered tool with a profiled probe or pin is rotated and slowly plunged into the joint line between two pieces of sheet or plate material, which are butted or lapped positioned together. In newer methods the probe can be angled (known as Skew Stir) or two contra-rotating probes can be used in tandem (known as Twin Stir). The parts are clamped if necessary onto a backing bar in a manner that prevents the abutting joint faces from being forced apart. Frictional heat generated between the wear-resistant welding tool and the material of the workpieces causes the latter to soften without reaching the melting point, and allows traversing of the tool along the weld line. The plasticised material is transferred from the leading edge of the tool to the trailing edge of the tool probe and is forged by the intimate contact of the tool shoulder and the pin profile. It leaves a solid phase bond between the two pieces. The process can be regarded as a solid phase keyhole welding technique since a hole to accommodate the probe is generated, then filled during the welding sequence. U.S. Patent 5,460,317 and related patents describe this method in more detail. Large welds in a variety of geometric configurations can be produced by this method. Friction stir welding methods have also been broadened to include friction stir processing of materials, including metal, where the rotating tool provides frictional heat to deform or plasticize the material, permitting incorporation of channels or moulding of the material.

FSW offers many advantages over traditional welding methods, in addition to the lack of need for filler. For example, parts welded by FSW are superior, as the method causes low distortion and low shrinkage in the welded parts, with no porosity in the joint. The method is more easily carried out than other welding methods, as no weld preparation is required, no gas shielding needed, there are no welding fumes or spatter, and only semi-skilled operators are required; robotic welding is also a possibility.

Friction stir welding was developed originally by The Welding Institute, Great Abington, UK, for joining aluminum alloys that were difficult to weld by conventional processes. Although successful in joining these relatively soft materials, expanding the application of FSW to harder, stronger materials, such as, for example, steel, titanium alloys, copper alloys, aluminum alloys of the 7XXX series and certain other non-ferrous metals has proven to be difficult due to the propensity of the tool to degrade or break during the welding process. Much of the degradation may be attributed to the high heat and stresses generated during FSW of these high-strength materials.

U.S. Patent Application Publication 2004/0238599 discloses the use of tungsten -based materials in FSW tools, for welding of steel parts. U.S. Patent 6,648,206 discloses the use of a superabrasive material such as polycrystalline cubic boron nitride (PCBN) in FSW tools for welding of superalloys and other high-strength alloys. There is a continued need to provide welding tools, apparatus, and methods that are capable of reliably joining components made of high-strength materials by FSW.

### SUMMARY OF THE INVENTION

Thus, the present invention provides a tool for friction stir welding or forming, as defined in claim 1.

This and other aspects of the invention will become more readily apparent from the following drawings, detailed description and appended claims.

### BRIEF DESCRIPTION OF THE DRAWINGS

The invention is further illustrated by the following drawings in which:
Figure 1 is a drawing of an embodiment of a tool and associated apparatus of the present invention.
Figure 2 is a drawing of additional embodiments of tools of the present invention; and
Figure 3 is a photograph of the tool tested as described in Example 1.
Figure 4 is a photograph of the tool tested as described in Example 2.
Figure 5 is a photograph of the tool tested as described in Example 3.
Figure 6 is a photograph of the tool tested as described in Example 4.
Figure 7 is a photograph of the tool tested as described in Example 5.
Figure 8 is a photograph of the tool tested as described in Example 6.
Figure 9 is a photograph of the weld produced as described in Example 8.
Figure 10 is a cross-section of the weld microstructure as described in Example 8.

### DETAILED DESCRIPTION OF THE INVENTION

As used herein in the specification and claims, including as used in the examples and unless otherwise expressly specified, all numbers may be read as if prefaced by the word "about", even if the term does not expressly appear. Also, any numerical range recited herein is intended to include all sub-ranges subsumed therein.

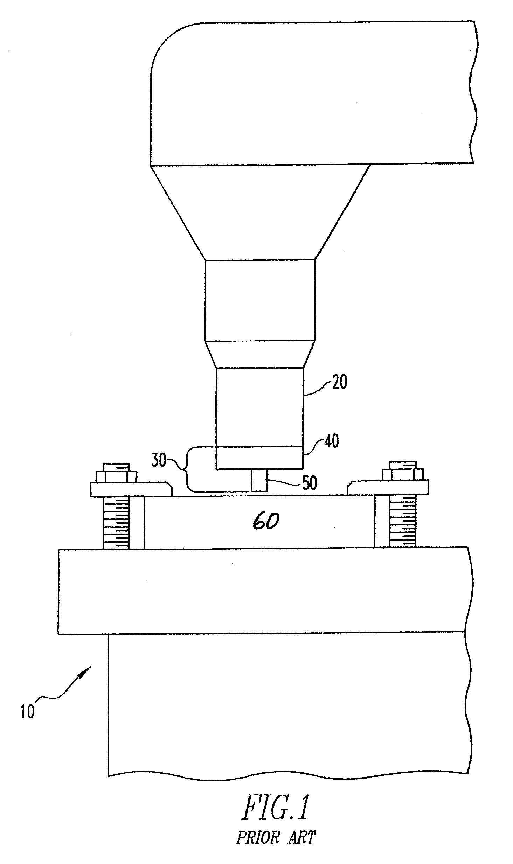

Referring to Figure 1, an exemplary prior art friction stir welding apparatus 10 is shown. The apparatus comprises a body 20 and a weld tool 30 having a shoulder portion 40 and a pin portion 50. The weld tool is used to weld a workpiece 60. As will be appreciated, numerous tools have been created having the same basic design, with various improvements to shape, size, and other features (such as the Skew Stir or Twin Stir mentioned above), to optimize the welding process. In some designs, the shoulder portion of the tool is an integral part of the main body or shank of the tool, whereas in other designs the shoulder and/or pin may be made from a material which is distinct from the upper body of the tool (as in the case of the present invention). Additionally, in some tools the shoulder and/or pin can be separate pieces which are adapted to be joined or fit onto the body, for example, when a replaceable shoulder and/or pin is desired. The materials used in the welding tools of the present invention can be adapted to use in any friction stir welding tool, as would be understood by one skilled in the art.

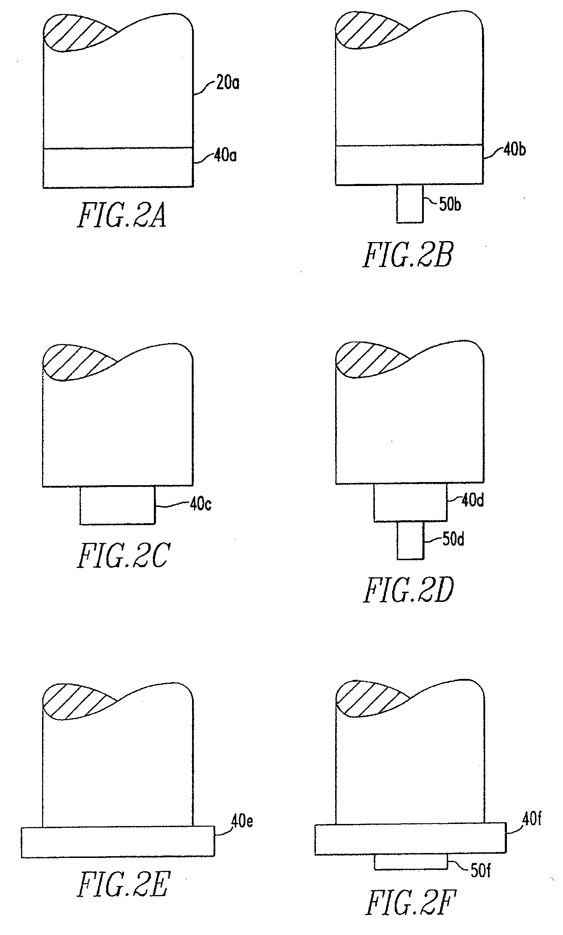

Additionally, as would be understood by one skilled in the art, the weld tools of the present invention can be used in both traditional friction stir welding methods as well as the newer methods, including, for example, friction stir spot welding (FSSW) and friction stir processing (for example, 3-dimensional near-net shape manufacturing using Pro-Stir, patented by The Welding Institute) and the Skew-stir and Twin-stir methods referred to above. Figure 2 shows additional embodiments of the tool of the present invention, for example, tools having no pin (Figs. 2a, 2c, and 2e). This type of tool can be used as the lead tool in the friction stir welding process known as Twin-Stir. Such tools can also be used in other methods of friction stir processing, such as the superplastic forming of microcomponents described in U.S. 6,655,575, incorporated herein by reference, where it is undesirable to have a probe and flat-surfaced tool is necessary for friction stir processing. Figs. 2b, 2d, and 2f illustrate additional embodiments having a pin. In some embodiments, the shoulder is sized the same as the body of the tool (2a, 2b), whereas in other embodiments the shoulder is smaller than the body (2c, 2d) or larger than the body (2e, 2f). While the tools depicted in Figures 2 (a-f) appear circular, other shapes of tools are contemplated and embraced by the present invention.

As used herein, the term "friction stir welding or forming" refers to methods of joining or forming articles of metal or other material that involve the use of a rotating tool that generates heat by means of friction, such that the heat modifies or deforms the material to produce a weld or other modification of the material such as channels or die casting of the metal or other material.

Thus, herein described is a tool for friction stir welding or forming. The tool may comprises a shoulder portion and optionally a pin portion, the shoulder portion being comprised of at least 60% by weight and up to 100% by weight of tungsten, molybdenum, tantalum, hafnium or niobium, the balance being alloying materials, if used. The shoulder portion is preferrably comprised of at least 85% by weight and up to 100% by weight of tungsten, molybdenum, tantalum, hafnium or niobium, the balance being alloying materials, if used; most preferably, the shoulder portion is comprised of 85-99 wt.% tungsten, molybdenum, tantalum, hafnium or niobium. In addition to alloying elements, metal matrix composites, fiber-reinforced metal matrix composites, and carbides and/or oxides of alloys or the above elements can be used. When used, the oxide and/or carbide is present in an amount of 0.01-5 wt.%, more preferably 0.1-3 wt. %. In one embodiment, the tantalum, hafnium or niobium shoulder portion is alloyed with tungsten, preferably 1-15 wt.% tungsten. An especially preferred material for the shoulder is Ta10W, a tantalum alloy containing 10% tungsten to ASTM B364 Grade R05255, commercially available from H.C. Starck & Co. In an additional embodiment, the tool comprises a shoulder portion only, of the materials described above.

In additional preferred embodiments, the tool comprises a shoulder portion and optionally a pin portion comprised of solid (unalloyed) molybdenum, lanthanated molybdenum, TZM(titanium zirconium molybdenum), MHC (molybdenum stabilized with hafnium carbide), or any combination of these, in terms of their use on the shoulder or pin. In the case of lanthanated molybdenum, the lanthanated component is typically in the form of La₂O₃. It has been found (as described in Example 9) that a tool (pin and shoulder) of solid molybdenum, when used to weld A17075, had a torque that was 6.7 % higher as compared to a MP159^{®} tool; the down force on the Mo tool was 27% less than the MP159^{®} tool; and the forward traverse force on the Mo tool was 10% less than the MP159^{®} tool.

In some embodiments, the pin portion of the tool is comprised of the same material as the shoulder. In other embodiments, the pin portion of the tool is comprised of a material which is different in chemical composition, microstructure and/or processing from the material comprising the shoulder portion of the tool. For example, in some embodiments, the pin portion is comprised of one or more materials selected from molybdenum, tungsten, hafnium, rhenium, iridium, vanadium, and metal-matrix composites, and alloys, carbides and oxides of any of these, as well as combinations of any of these. In some preferred embodiments, the pin portion of the tool is comprised of tungsten and an oxide and/or carbide of hafnium or zirconium, or any combination of these. Preferably, the oxide and/or carbide is present in an amount of 0.01-5 wt.%, more preferably 0.1-3 wt. %, and the balance is tungsten. In especially preferred embodiments, the pin is comprised of tungsten alloyed with 1-2 wt.% La₂O₃ or 5-30 wt.% Re, or a fiber-reinforced metal matrix composite, such as Ta or W with ZrO₂ fibers.

In some embodiments, the pin portion of the tool has a grain size of ASTM 5 or finer, preferably 8 or finer, as determined by ASTM method E112. The shoulder portion of the tool if made from a different material can have a grain size of ASTM 5 or finer.

Methods of making tools for friction stir forming and welding are standard methods known in the art. A tungsten, molybdenum, tantalum, hafnium or niobium-based material is processed to produce a feedstock which is worked to reduce a cross-sectional area of the feedstock by at least 90%. The worked feedstock can be fashioned into a tool (shoulder and optionally pin) by machining and/or grinding adapted to operate in a friction stir welding or forming apparatus.

Any of several suitable methods for processing the starting material into a feedstock can be used. For example, methods for solidifying metals from liquid can be used, such as various casting methods known in the art for the shoulder materials such as tungsten, molybdenum, tantalum, niobium and hafnium, or the pin materials, including tungsten, hafnium, rhenium, iridium, vanadium, and metal-matrix composites, and alloys, carbides and oxides of these. Methods of processing the starting material into a feedstock can also include powder metallurgy methods, including slurry methods, such as the oxide-dispersion strengthening (ODS) method described in U.S. Patent 4,622,068 or other ODS methods, as well as methods for compacting or consolidating solid powders, such as by sintering, hot compaction such as hot isostatic pressing, extrusion, die compaction and spraying, or cold compaction such as cold isostatic pressing, die compacting, injection molding and slip casting. These methods are well known in the art, and one skilled in the art can easily determine the appropriate temperatures, pressures and time periods for producing the desired properties in the finished product.

Finally, any of various processes whereby solid raw materials are vacuum arc or electron-beam melted and formed can be used to form the feedstock. After the starting material has been processed to form a feedstock, the feedstock is worked to reduce its cross-sectional area by at least 90%, more preferably at least 95%. Working the feedstock to this degree strain-hardens the feedstock material to a point where it advantageously resists degradation during the demanding stress and temperature conditions endured by tool during FSW of high-strength materials. The feedstock may be worked by any suitable metalworking process, including, for example, extrusion, swaging, rod rolling and forging. Combinations and sequences of different metalworking processes are also suitable to achieve the desired reduction in cross-sectional area of the feedstock. In general, materials are normally supplied in stress-relieved condition, but better results can be obtained by using materials in the as-rolled, un-annealed condition. Additionally, depending on the materials used, it may be necessary for processing to include torsional forging, rotary forging or swaging, to achieve the desired properties in the tool.

After working the feedstock to the desired state, the feedstock is then fashioned into a tool. This step may include the use of metalworking operations as described above as well as any of various machining operations, including cutting, turning, tapping, grinding, honing, polishing, and the like. The exact dimensions of the tool, including the shoulder profile and shoulder diameter to thickness ratio, will be chosen based on the material to be welded and the thickness of the material. One skilled in the art can determine the appropriate dimensions based on the material of the tool and the material to be welded.

Following the metalworking and machining operations, if used, the tools of the present invention are subjected to at least one or more surface treatments or surface coatings, or a combination of these. The coating(s) and/or surface treatment(s) can be applied in any order.

Surface coatings, by way of example, include electroplating, such as electroplating of Ta, Ru and Rh; hard chromium plating and nickel plating; physical vapor deposition (PVD), e.g., magnetron sputtering and plasma processes to deposit materials such as AlCrN, WC/C, diamond-like carbon, WC, HfC, RuC, RhC, VN, VC, TaN, TaC, MoN, MoC, NbN or NbC, as well as nitrides and carbides produced by magnetron sputtering, and combinations of two or more coatings to produce an alloy such as TaVN and the like; chemical vapor deposition (CVD), including siliciding and other oxidation resistant coatings; thermal spraying, vacuum plasma spraying or molten salt electro-deposition, to include deposition of SiO2, Ti, Pt, TiO2, Zr, Ta2O5, V, Si3N4, Rh, Hf, B, VN, B4C, Ir, Nb, NbN, Mo, SiC, ZrO2, HfO2, VC, WC, WB2, NbB2, TiB2, TiN, ZrN, Ta, TaB2, ZrB2, BN, HfB2, TiC, Re, HfN, TaN, W, NbC, ZrC, C, TaC, HfC. Combinations of coatings can also be used, for example multi-layer coatings via electroplating or PVD or plasma processes, or thermal spraying, or vacuum plasma spraying, or combinations of these.

In some preferred embodiments, the pin portion and/or the shoulder portion of a tool of the present invention has been provided with an oxidation resistant coating, such as by coating with a silicide. Examples of silicide coatings are known in the art, such as the coatings described in U.S. 6,214,474, incorporated herein by reference. In a preferred embodiment, the tool is subjected to a silicide treatment by heating the component in silicon tetrafluoride gas in a sealed retort, in a hydrogen/ nitrogen atmosphere, for a period of about 3-20 hours, more preferably 4-6 hours, at a temperature of 1000° - 1200°C, more preferably 1050°-1150°C. The SiF₄ reacts with the surface of the article to form a metal disilicide such as TaSi₂ or MoSi₂, for example. At high temperatures the outer surface of the disilicide layer reacts with oxygen in the atmosphere to form an oxide which sublimes and forms a protective layer of SiO₂, thus providing resistance to further oxidation.

Surface treatments are those treatments which act to change the chemistry of the substrate to create a harder and often tougher surface layer and provide additional resistance to fatigue. Depending on the treatment, penetration can go up to several millimeters beyond the surface. Surface treatments include, for example, case hardening methods, such as nitriding, carburizing (also known as carbiding), carbo-nitriding (or nitro-carburizing), flame, spark or induction hardening, laser or electron beam hardening, shot blasting and laser shock peening, as these terms are known in the art.

In a preferred embodiment of the tool herein described, a W-, Mo-, Ta- , Hf- or Nb-based shoulder and/or pin has been case hardened, such as by carburizing. Carburizing is a process known in the art, in which a hydrocarbon such as acetylene reacts with the metal surface to form atomic carbon which diffuses into the metal substrate. There are various forms of carburizing, such as by the packing process, in which the piece to be hardened is packed in a steel container so that it is completely surrounded by granules of charcoal and molasses. The container is then heated in a furnace or otherwise to temperatures above 800° C, typically 800°-1200°C, as is known in the art. The charcoal is treated with an activating chemical such as barium carbonate that promotes the formation of carbon dioxide. This gas in turn reacts with the excess carbon in the charcoal to produce carbon monoxide, which reacts with the surface of the material being treated to form atomic carbon that diffuses into the metal substrate.

In a preferred embodiment, the shoulder and/or pin of the present invention is carburized in a nitrogen atmosphere (often referred to as carbo-nitriding or nitro-carburizing). The tool is heated to temperatures between 1000°-2000°C, preferably 1500°-1800°C, in a carbon-enriched flame, such as oxy-acetylene, while immersing the tool in carbon powder as described above in the carburizing process. The process is carried out in an enclosed environment under a nitrogen blanket, for a period of time between 2 minutes and about 6 hours, depending on the material being hardened. Both C and N are absorbed into the surface of the component.

Other carburizing methods are also known. For example, carburizing can be accomplished by using oxy-acetylene wherein the friction stir welding tool is preheated with a flame containing oxygen, followed by heating with a second acetylene flame having reduced or zero oxygen, and optionally with or without the addition of a carbon source such as graphite powder. The acetylene flame produces a flame which causes carburization of the metal surface up to a depth of ∼200µm. An inert shielding gas such as argon is used to prevent oxidation, and the tool is allowed to cool to a temperature below 250°C in the inert shielding gas before the heating flamed is turned off. This technique can be adapted for smaller components and parts thereof such as only the pin area or only the shoulder of the tool as desired.

Vacuum carburizing is another method of carburizing which is performed in a vacuum furnace at the necessary temperature by introducing a gas, such as methane, acetylene (C₂H₂) or other hydrocarbon-based gas. Times and temperatures are as described above for other methods of carburization. This process is useful for surface engineering of W and its alloys (for example, LaW or WRe), Mo and its alloys (such as LaMo, TZM, MHC, and oxide-dispersion strengthened molybdenum alloys containing oxides of yttrium and /or cerium); Re and its alloys, Ru and its alloys, Rh and its alloys and Os and its alloys.

If vacuum carburizing Ta or its alloys (for example Ta10W), Hf and its alloys or Nb, then a post de-gas cycle is required to remove H from the material. This would otherwise cause hydrogen embrittlement and premature failure. De-gassing is conducted at 1250°C for a time relative to the diameter of the component, for example for 6,35 mm (¼") rod requires 4 hours and for 25,4 mm (1") approximately 16 hours is required. H content should be <10 ppm for effective function. Vacuum nitriding can also be performed in a similar manner as carburizing described above, and has the benefit of not causing embrittlement because no hydrogen is present, as there is in carburization. This method is suitable for example, for Hf as HfN is only slightly softer than HfC. HfC can also be deposited by vacuum plasma spraying, as performed by Plasma Processes, Inc.

In some embodiments, the weld tools herein described (shoulder and/or pin) have had a surface nitriding treatment. Nitriding is a process of diffusing nitrogen into the surface of a metal. The nitrogen forms nitrides with elements such as tungsten, molybdenum, tantalum, niobium and hafnium. Prior to nitriding, parts are cleaned, and then heated in a furnace in a nitrogen atmosphere for 10 to 40 hours at 200-900 °C in the case of niobium and tantalum, and at temperatures of 2000°-2600° for tungsten and molybdenum. As will be appreciated by one skilled in the art, the temperature and time of treatment will depend on the material being treated, and is within the ability of a skilled artisan to determine. Nitrogen diffuses into the metal and forms nitride alloys, to a depth of about 100µm to 1 mm, again, depending on the material and treatment conditions. Nitriding is preferred for weld tools made of 85-99% Ta, Nb, or Hf or their alloys, and is also useful for 85-95% W or its alloys.

In the case of molybdenum tools, ruthenium plating is a preferred surface coating, applied in a thickness of 0.1 - 10 microns, preferably 0.5-5 microns. In the case of a tool having a Ta10W shoulder and a LaW pin, one preferred surface coating is silicide. Other preferred treatments include carburizing and/or nitriding, or a combination of coating and surface treatment, such as surface engineer the pin with a Ru coating or carburization or nitriding, or a combination of coating and surface treatment.

In some embodiments, thermal spraying is used to apply a coating to the surface of the tool, either the shoulder portion or the pin portion, or both. Thermal spraying involves the softening or melting of a heat fusible metal component material by heat and propelling the softened or melted material in particulate form against a surface to be coated. The heated particles strike the surface where they are cooled and bonded thereto. A conventional thermal spray gun may be used for the purpose of the both heating and propelling the particles.

A thermal spray gun normally utilizes a combustion or plasma or electric arc to produce the heat for melting of the powder particles. In a powder type combustion thermal spray gun, the carrier gas, which entrains and transports the powder, is typically an inert gas such as argon. In a plasma spray gun, the primary plasma gas is generally argon or nitrogen. Hydrogen or helium is usually added to the primary plasma gas, and the carrier gas is generally the same as the primary plasma gas. Other thermal spray methods could also be used. A good general description of thermal spraying is provided in U.S. Pat. No. 5,049,450.

Some suitable thermal spray techniques include, but are not limited to, plasma flame spraying in natural atmosphere (APS); plasma spraying in a controlled atmosphere such as an inert gas, known as "controlled atmosphere plasma spraying" (CAPS), and plasma spraying in a partial or complete vacuum known as "vacuum plasma spraying" (VPS). Combustion thermal spray processes including conventional combustion flame spraying, high velocity oxy fuel (HVOF) spraying; and high velocity oxy air (HVAF). Other thermal spray methods include electric arc thermal spray processes.

Suitable materials for use in thermally sprayed coatings include, for example, aluminum and aluminum alloys; amorphous alloys (armocor); boron; carbon; MCrAlX, such as FeCrAlY or NiCrAlY; hafnium; iridium; lanthanum hexaboride; metal matrix composites; niobium and niobium alloys; nickel; nickel aluminide; rhenium; silicon-carbide stainless steel; ruthenium; tantalum; tantalum-10W; titanium; titanium nitride; titanium carbo-nitride; titanium aluminum nitride; titanium chromium nitride; tungsten; tungsten nickel iron; tungsten/Re; ceramics such as alumina; alumina oxy-nitride; alumina-50%AIN; alumina-40% titania; alumina-silicon nitride; aluminum nitride; aluminum titanium nitride; zirconium nitride; boron nitride; ceramic matrix composites; cordierite; hafnium boride; hafnium nitride; molybdenum disilicide-20-40%SiC; titania; zircon; zircon-AIN; zirconia stabilized with yttria; carbides, such as chromium carbide; diamond/glassy carbon; hafnium carbide; tantalum carbide; and tungsten carbide. Preferred among these thermal coatings are tungsten carbide and hafnium carbide.

A preferred method of thermal spraying is vacuum plasma spraying or spraying in an inert atmosphere such as argon or helium to deposit a surface coating on the pin and/or shoulder of the tool, after it has been worked, machined and otherwise processed. As will be appreciated by one skilled in the art, numerous combinations of materials, surface coatings and surface treatments can be used to fashion the tool of the present invention, as the shoulder portion and optionally pin portion of the tool can be made of the same or different materials and have the same or different surface coatings and surface treatments, the selection of each being independent of the other. Surface coated or treated tools of the present invention will have a Vickers hardness of between 2 and 20 times greater than untreated tools, preferably between 4 and 40 times greater, most preferably between 15 and 20 times greater than untreated tools. Carburizing and/or nitriding can provide a tool with Vickers hardness values between 500 and 1500 Hv(300), more preferably between 1000 and 1500 Hv(300).

Advanced surface engineering can be used to prepare tooling for friction stir welding or forming. For example, a tool with a coating applied can subsequently be carburized or nitrided to a greater depth than the coating thickness. This will promote the adhesion of the coating to the substrate and act to further reinforce the substrate by providing a harder and integral sub-surface layer important for resistance of the huge torsional forces and fatigue experienced by the probe, and in this way provide enhanced tool performance. The coating can be applied via PVD (for example magnetron sputtering or plasma deposition), CVD (for example silicide coating), electroplating, thermal spraying or vacuum plasma spraying, or similar technologies. The surface coatings and treatments can be applied to the shoulder portion, the pin portion if present, or both.

In certain preferred embodiments, the tools of the present invention are used in welding pieces made of steel. Steels are defined as a large family of metal alloys in which iron is mixed with carbon and other elements, and are described as mild, medium- or high-carbon steels according to the percentage of carbon they contain. Some specific types of steel include carbon steel; Damascus steel, which is essentially a complicated alloy with iron as main component; stainless steels, having higher amounts of chromium and including austenitic, ferritic and martensitic steels; surgical stainless steels containing a minimum of 10.5% chromium, often combined with nickel, to resist corrosion (rust); tool steels; high strength, low alloy (HSLA) steel; advanced high strength steels; ferrous superalloys; and cast iron. As used herein, the term "steel" is used to denote any iron - carbon alloy, as exemplified by the types of steel listed above, as would be understood by one skilled in the art. A tool comprised of Ta10W in the shoulder and LaW in the pin, the shoulder and the pin having been carbonitrided, can weld 12% Cr steel (Ferritic Utility grade Stainless steel DIN 1.4003 ASTM A240 Grade UNS S41003) of ½ inch thickness for a distance of over 20 meters with over 20 plunges.

In addition to steel, materials which can be welded by the friction stir welding tools of the present invention include, for example, copper-based alloys, cobalt-based superalloys, nickel-based superalloys, iron-based superalloys, nickel-iron-based superalloys, oxide-dispersion strengthened nickel superalloys, and titanium-based alloys. These alloys are well-known in the art; and many of these alloys are commercially available.

In other embodiments, the tools of the present invention are particularly well suited for welding of aluminum alloys; especially aluminum alloys in the 7XXX series, including Al7075, other Al alloys in the 5XXX and 6XXX series such as 5083 and 6082, and Al alloys in the 2XXX series, most of which are impossible to weld using conventional tool steel. While the tools of the present invention are suitable for welding all aluminum alloys, there are less expensive alternatives for friction stir welding of some of these alloys. The materials of the present invention are better suited to the hard aluminum alloys of the 7XXX series. A ruthenium-plated molybdenum tool can weld aluminum 7XXX series of 12,7 mm (½ inch) thickness for a distance of over 20 meters with over 20 plunges.

Thus, in an additional aspect, herein described are articles which have been welded by the friction stir welding or forming tools of the present invention. Tools of the present invention can weld steel, superalloys and aluminum sheets or plates together for at least 10 meters, in some cases at least 15 meters, and in some cases at least 20 meters, without failure of the tool material.

### EXAMPLES

The following examples are intended to illustrate the invention and should not be construed as limiting the invention in any way.

In examples 1-5, five 25,4 mm (1") nominal diameter tantalum 10% tungsten alloy stir welding tools (both pin and shoulder), one without surface treatment and four others with various surface treatments, were evaluated for their ability to weld 12% Cr steel (UNS S41003) of ½ inch thickness. Welding speeds were nominally 88,9 mm (3.5") per minute. In all trials, commercially available tantalum 10% tungsten rods (ASTM B364 Grade R05255, available from H.C. Starck Inc.) were machined to the required tool profile using conventional machining techniques such as turning and milling, with tungsten carbide tools and chlorinated hydrocarbon lubricants as are known to those skilled in the art. After machining to the required profile the thus produced tool, both the pin and shoulder portions of the tool were surface treated to improve surface durability and hardness by a variety of surface engineering methods described in more detail below.

### Example 1 - No treatment

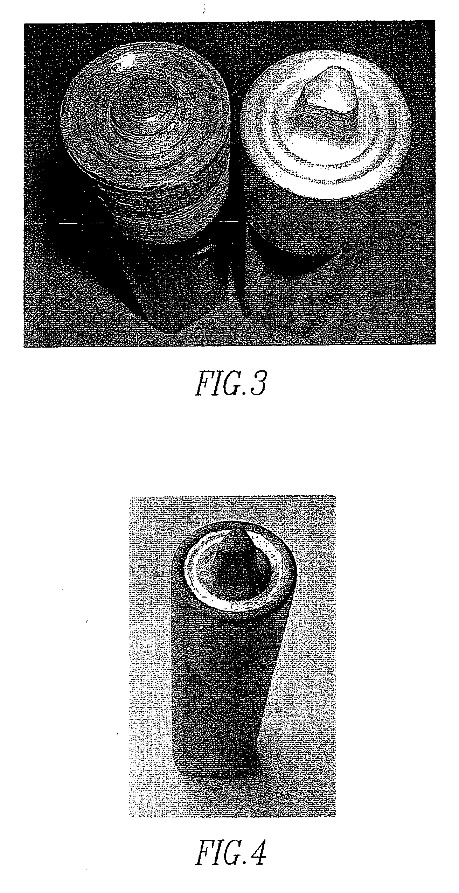

This tool was evaluated as a reference for all other tools. A pilot hole was drilled in the steel and a "weld" carried out without the use of any protective atmosphere. The tool reached a temperature in excess of 1200°C but there was no smoking, possibly due to a protective tantalum oxide layer being formed in situ. The weld, stopped after 500mm, was quite smooth, but tool wear was excessive, the point being completely eroded. Wear of the point and the shoulder both occurred. This tool is shown in Figure 3, both before and after welding.

### Example 2 - Carbo-nitriding

Carbo-nitriding was achieved by heating the tool to about 1,000°C for about 10 minutes in an enclosed container in a nitrogen atmosphere. The tool was then contacted 3-4 times with a case hardening powder containing carbon, sodium carbonate and molasses (Kasenit, available from Dacar Tools Limited, UK). The tool was cooled under a nitrogen atmosphere as well. The surface of the sample was coated with a white crumbly deposit which scraped off easily. This converted the surface layer to tantalum carbide to a depth of approximately 100µm and increased the hardness from ∼200Hv (300) (Vickers Hardness Number) to ∼1000Hv (300). Some oxidation occurred and the diameter was reduced considerably but the tool acquired a hard, black coating. Because of the reduction in diameter, it was necessary to use a shim to hold it centrally in the collet. A very smooth weld was produced. There was wear of the point but the shoulder showed little if any wear. This tool is shown in Figure 4.

### Example 3 - Nitriding

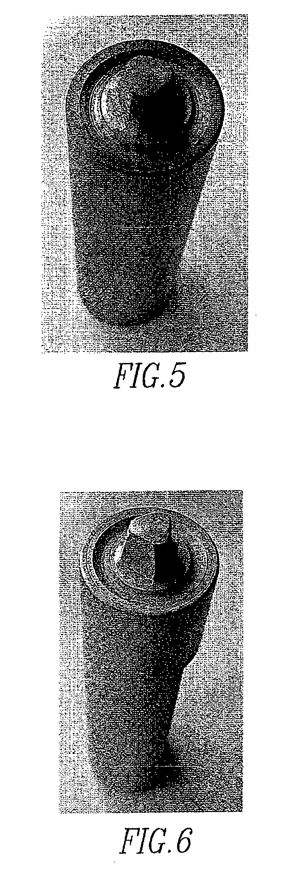

A tool was heated at 850°C for 2½ hours in a tube furnace under nitrogen atmosphere, cooled at 200°C for 30 minutes and brought to atmosphere for 30 minutes until cooled to room temperature. This process was repeated a further two times but was held at 850°C for just 30 minutes each time. After each heating/cooling cycle, hardness was measure until the maximum hardness was achieved. This produced a surface hardness in the region of 1000 -1300 Hv(300). Thus the tool was hardened for a total of 4 hours at 850°C. The point showed some wear but was still generally intact and the weld was very smooth. This tool is shown in Figure 5.

### Example 4 - Siliciding

Oxidation protection was achieved by the application of a layer of tantalum disilicide to the component surface. On heating such layer to >1000°C decomposition of the layer occurs liberating silicon dioxide, a form of a glass known as quartz, which flows over the surface thereby sealing the surface and preventing oxidation occurring. The treatment was accomplished by heating the component in silicon tetra-fluoride gas in a sealed retort for a period of about 5 hours at about 1100°C, thereby depositing a layer of tantalum di-silicide on the surface to a depth of about 125µm. This coating is integral with the component surface, is chemically bonded and combined therewith. During the coating process, the material absorbs hydrogen and it is necessary to remove the embrittling effect of the hydrogen by degassing for 4 hours at 1250°C. The coating causes an increase in all dimensions by 50µm so allowances were made in the machining of components to be so treated.

The weld made by this tool was reasonably smooth but the initial weld pressure was excessive causing the tool to plough into the steel surface. After welding, the point of the tool had disappeared completely but there was evidence of cracking around the point. It is possible that the hydrogen had not been completely removed by the degassing treatment. After degassing the residual hydrogen should be less than 2ppm. The shoulder and groove remained in good condition. This tool is shown in Figure 6.

### Example 5 - Aluminum oxy-nitride coating

A 3µm coating of aluminum oxy-nitride was applied by magnetron sputtering at Teer Coatings, UK, using standard equipment. The tool was cleaned in acetone in an ultrasonic bath for 15 minutes and then air dried in atmosphere. After placing the tool in the magnetron chamber (argon atmosphere) the chamber was pumped down to < 3 x 10⁻⁵ Tor. An initial light plasma etch was performed at 300W for 10 minutes. The Al oxi-nitride coating was then applied using an Al target and regulating the quantities of O₂ and N gas in the chamber.

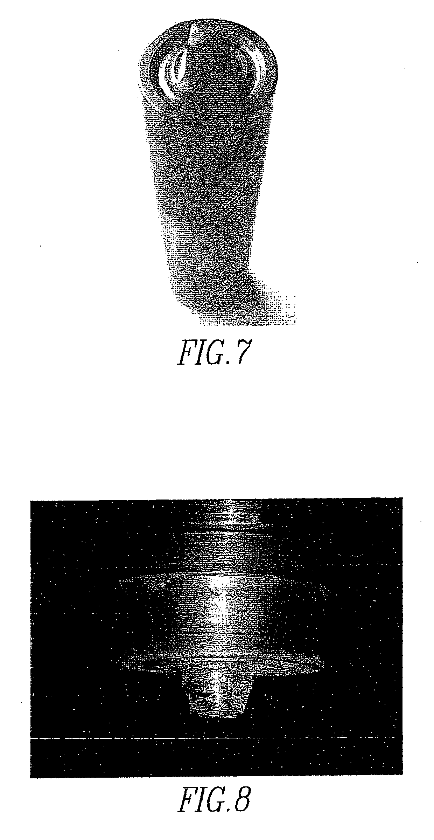

This tool was bright black in appearance. A pilot hole was drilled in the steel prior to welding in the normal way but the hole was too big for the tool and thus a void was dragged into the weld initially. Slowing down the weld traverse speed to allow material to build up and fill the void, followed by increasing to normal speed alleviated the problem. Although the point did not break off as had occurred with the silicide coated tool, wear was still considerable. Oxidation of the tool was evident. This tool is shown in Figure 7.

In all cases, wear or breakage of the point occurred but the shoulders remained intact and free of material build up. The good quality of the shoulder region and groove provided a smooth weld surface. The smoothest welds were produced by the carburized and nitrided tools.

### Example 6 - Solid Mo electroplated with 3µm Ru (not inventive)

A solid molybdenum tool made from commercial grade powder metallurgy molybdenum rod and having a 45mm shoulder diameter, 14-10mm probe diameter base-tip and a12 mm probe length (just under ½ inch) was produced. 3µm ruthenium was electroplated onto the bulk of the tool and sintered at 850°C for 1-2 hours.

A 10.4mm diameter pilot hole was drilled in an Al7075 sheet and the tool was brought up to rotational speed and wound down slowly into the hole. Machine parameters were as follows: 312 rpm, 1.6 mm/s, and 50-55kN down force.

Temperatures reached 520°C at the rear of the shoulder and 620°C at the leading edge. After about 750mm during the first run the machine malfunctioned and both rotational speed and linear velocity increased dramatically. The tool was immediately retracted. Remarkably the tool appeared unaffected and went on to weld 20 further meters after 20 plunges. Again, no significant wear was observed. Figure 8 shows the tool after 5 plunges and 4.75 meters of weld.

### Example 7 - Solid LaW tool

A solid LaW (1-2% La₂O₃) tool having a 30mm shoulder diameter, 10.75-7.7mm probe diameter base-tip and 10 mm probe length (just under ½ inch) was used to weld 12% Cr steel of ½ inch thickness. Machine parameters were 625 rpm, 2.9 mm/s and 25-30kN down force. The target length was 1m. This tool successfully welded a further meter distance in steel and showed no signs of apparent wear. The surface finish of the weld was not good, as expected with LaW, although the weld was good internally.

### Example 8 - Ta10W shoulder and LaW pin

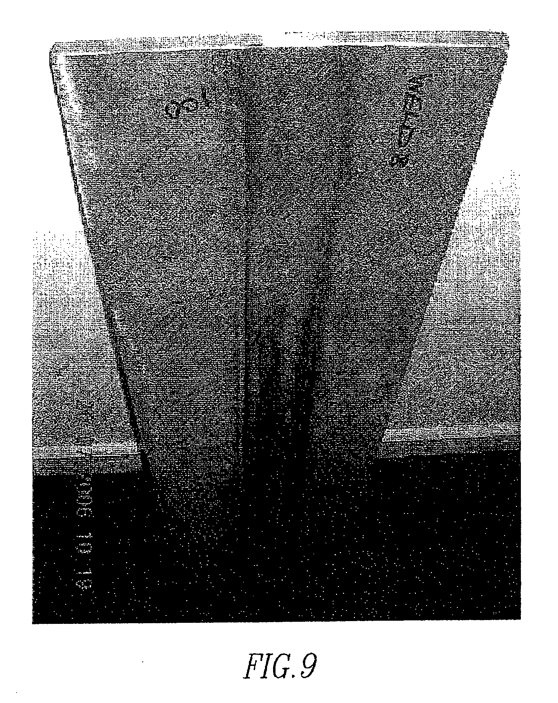

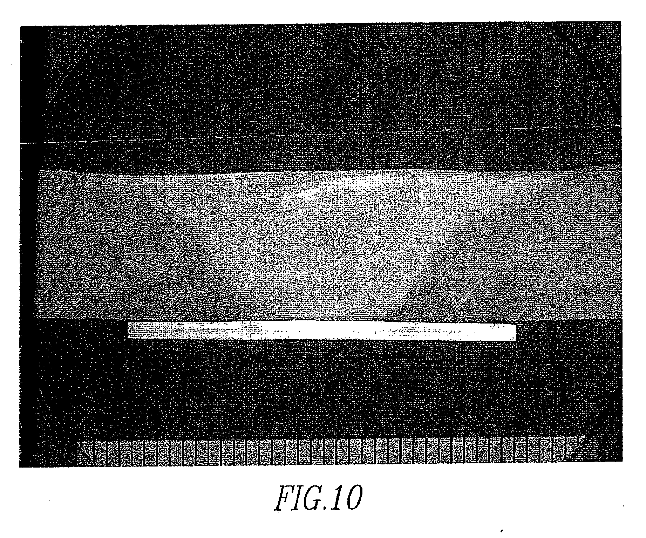

A tool having a shoulder of Ta10W and a pin of LaW (1-2% La₂O₃) was carbo-nitrided as described in Example 2 and used to weld 12% Cr steel of 12,7 mm (½ inch) thickness. Machine parameters were: rotational speed of 625 rpm, 32 kN load, weld linear speed of 2 mm/sec (2.5 max) and 12.5 pilot hole. No apparent wear or distortion was observed after 20 meters and 20 plunges. A picture of the welded steel is provided in Figures 9 and 10. Figure 10 is a cross-section of the weld microstructure. A 316 grade stainless steel plate, shown below the welded sheet and not welded to it, was placed beneath the materials to protect the weld bed.

### Example 9 Aluminium wear trial (not inventive)

A tool (shoulder and pin) comprised of MP159^{®} (a nickel-cobalt-chromium alloy available from Timkin Latrobe Steel of Latrobe, PA) was used for the first trial, along a meter test plate of Al7075 of 12.7 mm (½ inch) thickness. After touch down conditions had been established the traverse was ramped up to 1.5 mm/sec, then 2 mm/sec, then as the traverse rate was increased to 2.5 mm/sec, the tool could no longer force its way through the plate. It stopped at 2.4 mm/sec, having only achieved just over 500 mm in length. The probe remained intact. A further trial with the MP159^{®} again resulted in an incomplete weld about 600 mm long. The probe remained intact.

A comparison trial with a solid Mo tool (shoulder and pin) not covered by the scope of the present invention completed the same regime and completed the full length of the meter wear test easily, well within the capacity of the machine. The surface finish was different from normal but looked good. The probe remained intact.

It has been discovered that the friction coupling of tool material to the workpiece material has a measurable effect. Instrumentation charts taken from the earlier trials on the ESAB machine gave further evidence to support this observed coupling effect.

Given the same tool geometry and the same process parameters, it was determined that the torque on the Mo tool was 6.7 % higher as compared to the MP159^{®} tool; the down force on the Mo tool was 27% less than the MP159^{®} tool; and the forward traverse force on the Mo tool was 10% less than the MP159^{®} tool.

Whereas particular embodiments of this invention have been described above for purposes of illustration, it will be evident to those skilled in the art that numerous variations of the details of the present invention may be made without departing from the invention as defined in the appended claims.

## Claims

1. A tool (20) for friction stir welding or forming, the tool (20) comprising a shoulder portion (40), **characterised by** the shoulder portion (40) comprised of at least 60% by weight and up to 99 % by weight of , tantalum, niobium or hafnium, and 1 to 15 % by weight tungsten and the balance being alloying materials, wherein at least a portion of the tool (20) has had at least one surface coating or surface treatment.

2. The tool (20) of claim 1, wherein the shoulder portion (40) is comprised of 85 to 99 wt. % tantalum, niobium or hafnium alloyed with 1 to 15 wt.% tungsten.

3. The tool (20) of claim 1, wherein the shoulder portion (40) is Ta-10W.

4. The tool (20) of any one of the claims 1 to 3, having a pin portion (50) comprised of a material which is different in chemical composition, microstructure and/or processing from the material comprising the shoulder portion (40) of the welding tool (20) and optionally the pin portion (50) has a grain size of ASTM 8 or finer, as determined by ASTM method E1 12.

5. The tool (20) of claim 4, wherein the pin portion (50) is comprised of one or more materials selected from the group consisting of molybdenum, tungsten, hafnium, zirconium, tantalum, rhenium, niobium, iridium, vanadium, metal-matrix composites, alloys, carbides and oxides of any of these, and combinations thereof.

6. The tool (20) of claim 5, wherein the pin portion (50) is comprised of tungsten and an oxide and/or carbide of an element selected from the group consisting of lanthanum, hafnium, zirconium, and combinations of these.

7. The tool (20) of any one of the claims 1 to 6, wherein
(a) the pin portion (50) is comprised of 0.01 to 5 wt. % of said oxide and/or carbide, the balance being tungsten, and/or
(b) the shoulder portion (40) is comprised of 85 to 99 wt. % tantalum, niobium or hafnium and 1 to 15 wt.% tungsten.

8. The tool (20) of claim 7, wherein
(a) the shoulder portion (40) has a silicide coating and
(b) the pin portion (50) has a coating of hafnium carbide or has been carburized.

9. The tool (20) of claim 1, having a pin (50) comprised of one of Ta10W, La₂O₃W, WRe or fiber reinforced metal matrix composites.

10. The tool (20) of claim 1, wherein
(a) the coating is a thermally sprayed coating, a composite coating and/or a multilayer coating, and/or
(b) the surface treatment is laser shock peening or case hardening, preferably carburization, carbo-nitriding or nitriding.

11. The tool (20) of claim 1, wherein the surface coating or surface treatment is selected from the group consisting of case hardening, silicide coating, electroplating and combinations thereof.

12. The tool (20) of claim 1, having at least two surface treatments and/or surface coatings thereon.

13. Use of a tool (20) according to any one of the preceding claims in welding selected from the group consisting of steel, aluminum, aluminum alloys, like 2XXX or 7XXX series aluminum alloy, copper, copper alloys, titanium and titanium alloys.

## Patentansprüche

1. Werkzeug (20) zum Rührreibschweißen oder Formen, wobei das Werkzeug (20) einen Schulter-Teil (40) umfasst, **dadurch gekennzeichnet, dass** der Schulter-Teil (40) mindestens 60 Gewichts-% und bis zu 99 Gewichts-% an Tantal, Niob oder Hafnium, und 1 bis 15 Gewichts-% Wolfram und als Rest Legierungs-Materialien umfasst, wobei mindestens ein Teil des Werkzeugs (20) mindestens einer Oberflächen-Beschichtung oder Oberflächen-Behandlung unterzogen worden ist.

2. Werkzeug (20) nach Anspruch 1, wobei der Schulter-Teil (40) von 85 bis 99 Gew.-% Tantal, Niob oder Hafnium, legiert mit 1 bis 15 Gew.-% Wolfram, umfasst.

3. Werkzeug (20) nach Anspruch 1, wobei der Schulter-Teil (40) Ta-10W ist.

4. Werkzeug (20) nach einem der Ansprüche 1 bis 3, mit einem Stift-Teil (50), der ein Material umfasst, das in der chemischen Zusammensetzung, der Mikrostruktur und/oder dem Verarbeiten des Materials verschieden ist, welches den Schulter-Teil (40) des Schweiß-Werkzeugs (20) umfasst und der Stift-Teil (50) gegebenenfalls eine Korngröße von ASTM 8 oder feiner, wie durch ASTM-Verfahren E1 12 bestimmt, aufweist.

5. Werkzeug (20) nach Anspruch 4, wobei der Stift-Teil (50) ein oder mehrere Materialien, ausgewählt aus der Gruppe, bestehend aus Molybdän, Wolfram, Hafnium, Zirkonium, Tantal, Rhenium, Niob, Iridium, Vanadium, Metall-Matrix-Kompositen bzw. -Verbundwerkstoffen, Legierungen, Carbiden und Oxiden von beliebigen von diesen und Kombinationen davon, umfasst.

6. Werkzeug (20) nach Anspruch 5, wobei der Stift-Teil (50) Wolfram und ein Oxid und/oder Carbid von einem Element, ausgewählt aus der Gruppe, bestehend aus Lanthan, Hafnium, Zirkonium und Kombinationen von diesen, umfasst.

7. Werkzeug (20) nach einem der Ansprüche 1 bis 6, wobei
(a) der Stift-Teil (50) 0,01 bis 5 Gew.-% des Oxids und/oder Carbids, wobei der Rest Wolfram ist, umfasst und/oder
(b) der Schulter-Teil (40) 85 bis 99 Gew.-% Tantal, Niob oder Hafnium und 1 bis 15 Gew.-% Wolfram umfasst.

8. Werkzeug (20) nach Anspruch 7, wobei
(a) der Schulter-Teil (40) eine Silicid-Beschichtung aufweist und
(b) der Stift-Teil (50) eine Beschichtung von Hafniumcarbid aufweist oder karburiert wurde.

9. Werkzeug (20) nach Anspruch 1, mit einem Stift (50), der eines von Ta10W, La₂O₃W, WRe oder Faser-verstärkten Metall-Matrix-Kompositen bzw. -Verbundwerkstoffen umfasst.

10. Werkzeug (20) nach Anspruch 1, wobei
(a) die Beschichtung eine thermisch gespritzte Beschichtung, eine Komposit-Beschichtung bzw. Verbundwerkstoff-Beschichtung und/oder eine Mehrschicht-Beschichtung ist, und/oder
(b) die Oberflächen-Behandlung Laser-Schock-Peening oder Oberflächenhärtung, vorzugsweise Karburierung, Karbo-Nitrieren oder Nitrieren, ist.

11. Werkzeug (20) nach Anspruch 1, wobei die Oberflächen-Beschichtung oder Oberflächen-Behandlung ausgewählt ist aus der Gruppe, bestehend aus Oberflächenhärtung, Silicid-Beschichtung, Elektroplattieren und Kombinationen davon.

12. Werkzeug (20) nach Anspruch 1, mit mindestens zwei Oberflächen-Behandlungen und/oder Oberflächen-Beschichtungen darauf.

13. Verwendung von einem Werkzeug (20) nach einem der vorangehenden Ansprüche beim Schweißen, ausgewählt aus der Gruppe, bestehend aus Stahl, Aluminium, AluminiumLegierungen, wie eine Aluminium-Legierung der 2XXX oder 7XXX Reihen, Kupfer, Kupfer-Legierungen, Titan und Titan-Legierungen.

## Revendications

1. Outil (20) pour formage ou soudage par friction malaxage, l'outil (20) comprenant une partie formant épaulement (40), **caractérisé en ce que** la partie formant épaulement (40) est constituée d'au moins 60 % en poids et jusqu'à 99 % en poids de tantale, niobium ou hafnium, et de 1 à 15 % en poids de tungstène, le reste étant des matériaux d'alliage, dans lequel au moins une partie de l'outil (20) comporte au moins un revêtement de surface ou un traitement de surface.

2. Outil (20) selon la revendication 1, dans lequel la partie formant épaulement (40) est constituée de 85 à 99 % en poids de titane, niobium ou hafnium alliés avec 1 à 15 % en poids de tungstène.

3. Outil (20) selon la revendication 1, dans lequel la partie formant épaulement (40) est en Ta-10W.

4. Outil (20) selon l'une quelconque des revendications 1 à 3, comportant une partie formant broche (50) constituée d'un matériau dont la composition chimique, la microstructure et/ou le traitement diffèrent de ceux du matériau constituant la partie formant épaulement (40) de l'outil de soudage (20) et éventuellement la partie formant broche (50) présente une taille de grains d'ASTM 8 ou plus fine, telle que déterminée par la méthode ASTM E1 12.

5. Outil (20) selon la revendication 4, dans lequel la partie formant broche (50) est constituée d'un ou plusieurs matériau(x) choisi(s) dans l'ensemble constitué par le molybdène, le tungstène, le hafnium, le zirconium, le tantale, le rhénium, le niobium, l'iridium, le vanadium, les composites de matrices métalliques, les alliages, les carbures et les oxydes de n'importe lesquels de ceux-ci, et leurs combinaisons.

6. Outil (20) selon la revendication 5, dans lequel la partie formant broche (50) est constituée de tungstène et d'un oxyde et/ou carbure d'un élément choisi dans l'ensemble constitué par le lanthane, le hafnium, le zirconium, et leurs combinaisons.

7. Outil (20) selon l'une quelconque des revendications 1 à 6, dans lequel
(a) la partie formant broche (50) est constituée de 0,01 à 5 % en poids dudit oxyde et/ou carbure, le reste étant du tungstène, et/ou
(b) la partie formant épaulement (40) est constituée de 85 à 99 % en poids de tantale, niobium ou hafnium et de 1 à 15 % en poids de tungstène.

8. Outil (20) selon la revendication 7, dans lequel
(a) la partie formant épaulement (40) comporte un revêtement en siliciure et
(b) la partie formant broche (50) comporte un revêtement en carbure de hafnium ou a été carburée.

9. Outil (20) selon la revendication 1, comportant une broche (50) constitué de l'un parmi Ta10W, La₂O₃W, WRe ou de composites de matrices métalliques renforcés par des fibres.

10. Outil (20) selon la revendication 1, dans lequel
(a) le revêtement est un revêtement pulvérisé thermiquement, un revêtement composite et/ou un revêtement multicouche, et/ou
(b) le traitement de surface est un martelage par chocs de laser ou une trempe superficielle, de préférence une carburation, une carbonitruration ou une nitruration.

11. Outil (20) selon la revendication 1, dans lequel le revêtement de surface ou le traitement de surface est choisi dans l'ensemble constitué par une trempe superficielle, un revêtement de siliciure, un placage électrolytique et leurs combinaisons.

12. Outil (20) selon la revendication 1, présentant au moins deux traitements de surface et/ou revêtements de surface sur celui-ci.

13. Utilisation d'un outil (20) selon l'une quelconque des revendications précédentes dans un soudage choisi dans l'ensemble constitué par l'acier, l'aluminium, les alliages d'aluminium, tels que l'alliage d'aluminium série 2XXX ou 7XXX, le cuivre, les alliages de cuivre, le titane et les alliages de titane.
